# EUROPEAN PATENT APPLICATION

(11) **EP 4 282 728 A1**
(43) Date of publication of application: **29.11.2023**
(21) Application number: 23174534.0
(22) Date of filing: 22.05.2023
(51) Int. Cl.: B60W 60/00, B60W 50/14, B60W 50/16, B60K 28/06

(54) **METHOD FOR PROMPTING DRIVER, AND VEHICLE CONTROL DEVICE**

(30) Priority: 23.05.2022 CN 202210561833
(71) Applicant: Nio Technology (Anhui) Co., Ltd, Hefei City, Anhui 230611 (CN)
(72) Inventor: XIAO, Bohong, Hefei City, Anhui, 230611 (CN); HAN, Yiqi, Hefei City, Anhui, 230611 (CN); LUO, Wu, Hefei City, Anhui, 230611 (CN); GU, Yufeng, Hefei City, Anhui, 230611 (CN)
(74) Representative: Vossius & Partner Patentanwälte Rechtsanwälte mbB

(57) **Abstract**

The invention relates to a method for prompting a driver, the method including: (S110) receiving driver status information from a driver status sensing system; (S120) determining a current driving scenario; and (S130) selecting a suitable prompt from among a plurality of candidate prompts based on the driver status information in combination with the driving scenario, to remind or alert a driver. The invention further relates to a vehicle control device (2000), a computer program product, and a vehicle.

## Description

### Technical Field

The disclosure relates to the field of vehicle control, and more specifically, to a method for prompting a driver, a vehicle control device, a computer program product, and a vehicle.

### Background Art

At present, solutions in the industry of a vehicle reminding a driver of taking over or prompting the driver of information during autonomous driving or human driving mainly include giving a voice reminder simply via a vehicle control terminal of the vehicle, and adopting a plurality of reminders at the same time regardless of scenarios and driver statuses. These solutions fail to serve as an effective and direct alert or prompt to the driver, and may bring discomfort to the driver due to simultaneous generation of alerting and prompting sounds by a plurality of devices, and will cause panic in the driver in severe cases, which will affect the determination and operations of the driver and even result in safety risks.

Therefore, an improved solution for prompting a driver is desired.

### Summary

According to an aspect of the disclosure, there is provided a method for prompting a driver, the method including: receiving driver status information from a driver status sensing system; determining a current driving scenario; and selecting a suitable prompt from among a plurality of candidate prompts based on the driver status information in combination with the driving scenario, to remind or alert a driver.

As an addition or alternative to the above solution, in the above method, the driver status sensing system includes: a smart device, which is interconnected with a vehicle, a camera sensor, and an odor identification system.

As an addition or alternative to the above solution, in the above method, selecting a suitable prompt from among a plurality of candidate prompts based on the driver status information in combination with the driving scenario, to remind or alert a driver includes: when it is determined that an autonomous driving scenario has been entered, and the driver status information indicates that the driver has no ability to take over, awakening the driver with a sound of a vehicle head unit, and vibrations of a mobile phone and/or a wearable device and a seat, so that the driver drives to a safety place.

As an addition or alternative to the above solution, in the above method, selecting a suitable prompt from among a plurality of candidate prompts based on the driver status information in combination with the driving scenario, to remind or alert a driver includes: when the driver is required to take over in an autonomous driving scenario or there is information to be prompted in an autonomous or human driving scenario, and the driver status information indicates that the driver is operating a mobile phone, alerting the driver with a vibration and sound of the mobile phone.

As an addition or alternative to the above solution, in the above method, selecting a suitable prompt from among a plurality of candidate prompts based on the driver status information in combination with the driving scenario, to remind or alert a driver includes: when the driver is required to take over in an autonomous driving scenario or there is information to be prompted in an autonomous or human driving scenario, and the driver status information indicates that the driver is keeping mind on driving, alerting the driver with a sound and text of a vehicle head unit.

As an addition or alternative to the above solution, in the above method, selecting a suitable prompt from among a plurality of candidate prompts based on the driver status information in combination with the driving scenario, to remind or alert a driver includes: when the driver is required to take over in an autonomous driving scenario or there is information to be prompted in an autonomous or human driving scenario, and the driver status information indicates that the driver is taking mind off driving at a mild level, alerting the driver with a vibration and sound of a wearable device.

As an addition or alternative to the above solution, in the above method, selecting a suitable prompt from among a plurality of candidate prompts based on the driver status information in combination with the driving scenario, to remind or alert a driver includes: when the driver is required to take over in an autonomous driving scenario or there is information to be prompted in an autonomous or human driving scenario, and the driver status information indicates that the driver is taking mind off driving at a severe level, alerting the driver with a sound of a vehicle head unit, and vibrations of a mobile phone and/or a wearable device and a seat.

According to another aspect of the disclosure, there is provided a vehicle control device, the vehicle control device including: a receiving apparatus configured to receive driver status information from a driver status sensing system; a determination apparatus configured to determine a current driving scenario; and a selection apparatus configured to select a suitable prompt from among a plurality of candidate prompts based on the driver status information in combination with the driving scenario, to remind or alert a driver.

As an addition or alternative to the above solution, in the above device, the driver status sensing system includes: a smart device, which is interconnected with a vehicle, a camera sensor, and an odor identification system.

As a supplement or an alternative to the above solution, in the above device, the selection apparatus is configured to: when the determination apparatus determines that an autonomous driving scenario has been entered, and the driver status information indicates that the driver has no ability to take over, awaken the driver by means of an option of a sound of a vehicle head unit and vibrations of a mobile phone and/or a wearable device and a seat.

As a supplement or an alternative to the above solution, in the above device, the selection apparatus is configured to: when the determination apparatus determines that the driver is required to take over in an autonomous driving scenario or the determination apparatus determines that there is information to be prompted in an autonomous or human driving scenario, and the driver status information indicates that the driver is operating a mobile phone, alert the driver by means of an option of a vibration and sound of the mobile phone.

As a supplement or an alternative to the above solution, in the above device, the selection apparatus is configured to: when the determination apparatus determines that the driver is required to take over in an autonomous driving scenario or the determination apparatus determines that there is information to be prompted in an autonomous or human driving scenario, and the driver status information indicates that the driver is keeping mind on driving, alert the driver by means of an option of a sound and text of a vehicle head unit.

As a supplement or an alternative to the above solution, in the above device, the selection apparatus is configured to: when the determination apparatus determines that the driver is required to take over in an autonomous driving scenario or the determination apparatus determines that there is information to be prompted in an autonomous or human driving scenario, and the driver status information indicates that the driver is taking mind off driving at a mild level, alert the driver by means of an option of a vibration and sound of a wearable device.

As a supplement or an alternative to the above solution, in the above device, the selection apparatus is configured to: when the determination apparatus determines that the driver is required to take over in an autonomous driving scenario or the determination apparatus determines that there is information to be prompted in an autonomous or human driving scenario, and the driver status information indicates that the driver is taking mind off driving at a severe level, alert the driver by means of an option of a sound of a vehicle head unit and vibrations of a mobile phone and/or a wearable device and a seat.

According to still another aspect of the disclosure, there is provided a computer storage medium including instructions that, when run, execute the method as described above.

According to yet another aspect of the disclosure, there is provided a computer program product including a computer program, where when the computer program is executed by a processor, the method as described above is implemented.

According to still yet another aspect of the disclosure, there is provided a vehicle including the device as described above.

In the solution for prompting a driver according to the embodiments of the disclosure, a driver status sensing system (also referred to as a multi-sensing system, including, for example, a camera/an odor sensor, etc., and a mobile phone or a wearable device which is interconnected with a vehicle via Bluetooth) is used to sense a status of a driver, and a corresponding and suitable alert or prompt is adopted based on the status of the driver in combination with a current driving scenario, such that the driver can receive information in a friendly, direct and effective, and safe manner, and thus perform a next operation for safety.

### Brief Description of the Drawings

The above and other objectives and advantages of the disclosure will be more thorough and clearer from the following detailed description in conjunction with the accompanying drawings, where the same or similar elements are represented by the same reference numerals.
FIG. 1 is a schematic flowchart of a method for prompting a driver according to an embodiment of the disclosure;
FIG. 2 is a schematic diagram of a structure of a vehicle control device according to an embodiment of the disclosure;
FIG. 3 is a schematic diagram of a structure of a system for prompting a driver according to an embodiment of the disclosure;
FIG. 4 is a schematic flowchart of an alerting method for driving to a safety place to rest in autonomous driving according to an embodiment of the disclosure;
FIG. 5 is a schematic flowchart of an alerting method for driver takeover in autonomous driving according to an embodiment of the disclosure; and
FIG. 6 is a schematic flowchart of an information prompting method in autonomous driving or human driving according to an embodiment of the disclosure.

### Detailed Description of Embodiments

Solutions for prompting a driver according to various exemplary embodiments of the disclosure will be described below in detail with reference to the accompanying drawings.

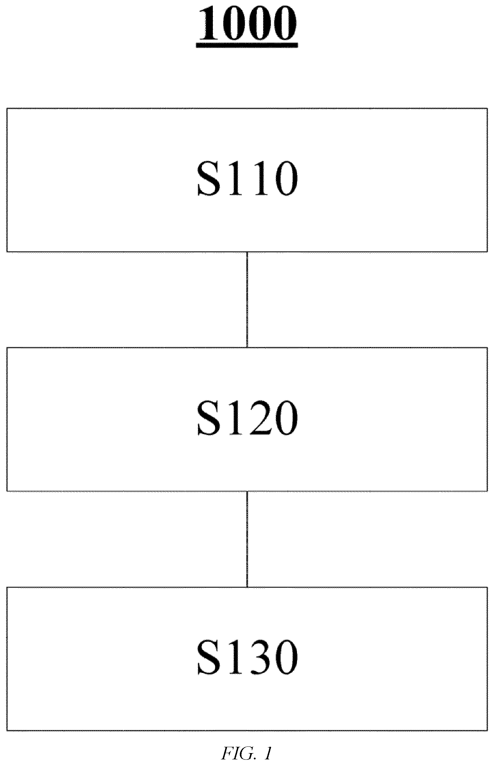

FIG. 1 is a schematic flowchart of a method 1000 for prompting a driver according to an embodiment of the disclosure. As shown in FIG. 1, the method 1000 for prompting a driver includes the following steps:
in step S 110, receiving driver status information from a driver status sensing system;
in step S 120, determining a current driving scenario; and
in step S130, selecting a suitable prompt from among a plurality of candidate prompts based on the driver status information in combination with the driving scenario, to remind or alert a driver.

"Driver status information", as the name implies, is information related to a status of a driver and is used to indicate how and in what state the driver uses a vehicle control component. In general, the status of the driver may be obtained from comprehensive analysis of a driving behavior, a driving style, vehicle characteristics, environmental conditions, etc., or may be inferred from physiological factors, external expressions, and emotional factors.

In the context of the disclosure, the driver status information is obtained by the driver status sensing system. The driver status sensing system may also be referred to as a multi-sensing system. In an embodiment, the driver status sensing system or the multi-sensing system may include: a camera, an odor sensing system, and a device (for example, a smart device such as a mobile phone, and a wearable device such as a wristband and a watch) which is interconnected with a vehicle control device/unit via Bluetooth. For example, the camera can be used to acquire an image of the driver. Based on the image, the driver can be found to exhibit a sign of distraction, fatigue or drowsiness, or even an unforeseen failure to drive, such as tricking a driving assistance system by keeping a mineral water bottle, in place of his/her hands, on a steering wheel, or arguing and fighting with passengers, etc. As an example, physical and mental conditions of the driver can be studied based on processing of a facial image of the driver. For example, the status of the driver can be detected in terms of eyelid closure, eye blinking, gaze direction, yawning, head movements, etc. Symptoms related to fatigue, distraction, and drowsiness are extracted, including: 1) symptoms related to an eye region: eye closing, distance between eyelids, fast eye blinking, gaze direction, and saccades; 2) symptoms related to a mouth region: opening/closing; 3) symptoms related to the head: head-nodding, and unchanged head posture and head; and 4) symptoms related to the face: mainly expressions.

The odor sensing system is used to sense odor characteristics of the driver. For example, one or more odor sensors are placed on a seat and a backrest, a headrest or the vehicle roof to detect an odorous substance released into ambient air by the human body, as well as environmental odor characteristics of the interior space, to determine whether the driver is driving drunk.

As part of the driver status sensing system, a device (e.g., a mobile phone) which is interconnected with the vehicle control device/unit via Bluetooth can be used to provide the driver status information regarding whether the driver is using the mobile phone (e.g., calling, messaging, etc.). It can be understood that in addition to the manner of interconnection via Bluetooth, a smart device (such as a mobile phone) can also be connected in other wired or wireless connection manners, including, but not limited to, WiFi, RFID, etc.

In one or more embodiments, the driver status may include: the driver has no or insufficient ability to take over (such as falling into asleep due to extreme fatigue, or getting drunk), the driver is operating a mobile phone (gazing at or operating a mobile phone), the driver is keeping mind on driving (keeping his/her hands on the steering wheel and eyes on the road ahead), the driver is taking mind off driving at a mild level, the driver is taking mind off driving at a severe level, etc.

"No ability to take over" refers to a situation where drunk driving is detected by an odor sensor or a driver is detected to fall into asleep (due to extreme fatigue, etc.) by a detection device such as a camera. In these cases, the driver has no ability to take over when needed under an autonomous driving system.

"Whether the driver is operating a mobile phone (including gazing at or operating a mobile phone)" refers to a situation where a mobile phone connected to the vehicle control device, an in-vehicle camera, etc. are used to sense that the driver is operating the mobile phone.

"The driver is keeping mind on driving" can include keeping his/her hands on the steering wheel and eyes on the road ahead. For example, the in-vehicle camera and other means are used to identify that the driver is paying attention to the driving of the vehicle, such as holding the steering wheel with his/her hands, keeping eyes on the road ahead, and not dealing with some things that are unrelated to the driving of the vehicle.

Taking mind off driving at a severe level means that the driver is being hardly awakened, such as being asleep (which may be, for example, sensed by a system such as a camera).

Taking mind off driving at a mild level, between "The driver is keeping mind on driving" and "Taking mind off driving at a severe level", means that the driver is not being asleep, but may be, for example, chatting with a member or reading a book.

Driver attributes, design parameters and operating statuses of the vehicle, and the driving environment of the vehicle change each other, forming a complicated driving scenario. In the context of the disclosure, accurate identification of a driving scenario in which the vehicle is currently located (i.e., the current driving scenario) facilitates selecting a suitable prompt from among a plurality of candidate prompts to remind or alert the driver. In an embodiment, the current driving scenario is that an autonomous driving mode is being entered. In another embodiment, the current driving scenario is that an autonomous driving mode has been entered, but a driver is required to take over. In still another embodiment, the current driving scenario is that there is information to be prompted in an autonomous or human driving scenario.

In an embodiment, the candidate prompts may include, but are not limited to, a vibration of a seat system, a sound and text of a vehicle head unit, a vibration, sound and text of a wearable device such as a watch or a wristband, and a vibration, sound and text of a mobile phone.

In an embodiment, step S130 includes: when it is determined that an autonomous driving scenario has been entered, and the driver status information indicates that the driver has no ability to take over, awakening the driver with a sound of a vehicle head unit, and vibrations of a mobile phone and/or a wearable device and a seat, so that the driver drives to a safety place. "No ability to take over" refers to a situation where drunk driving is detected by an odor sensor or a driver is detected to fall into asleep (due to extreme fatigue, etc.) by a detection device such as a camera. In these cases, the driver has no ability to take over when needed under an autonomous driving system, and is thus given an alert to drive to the nearest safety place to rest.

The above embodiment relates to an alerting solution in the case of the driver having no ability to take over. In the following several embodiments, a plurality of solutions that a driver is required to take over in an autonomous driving scenario or there is information to be prompted in an autonomous or human driving scenario are provided.

Specifically, in an embodiment, step S130 includes: when the driver is required to take over in an autonomous driving scenario or there is information to be prompted in an autonomous or human driving scenario, and the driver status information indicates that the driver is operating a mobile phone, alerting the driver with a vibration and sound of the mobile phone. "The driver is operating a mobile phone" means that a mobile phone connected to the vehicle control device, an in-vehicle camera, etc. are used to sense that the driver is operating the mobile phone (including gazing at or operating the mobile phone). In this case, the vibration, sound and text of the mobile phone are a direct and effective way to alert or prompt the driver.

In another embodiment, step S130 includes: when the driver is required to take over in an autonomous driving scenario or there is information to be prompted in an autonomous or human driving scenario, and the driver status information indicates that the driver is keeping mind on driving, alerting the driver with a sound and text of a vehicle head unit. Because the driver is keeping mind on driving and is not dealing with some things that are unrelated to vehicle driving, the sound and text of the vehicle head unit have already been an effective way to alert or prompt the driver.

In still another embodiment, step S130 includes: when the driver is required to take over in an autonomous driving scenario or there is information to be prompted in an autonomous or human driving scenario, and the driver status information indicates that the driver is taking mind off driving at a mild level, alerting the driver with a vibration and sound of a wearable device. Taking mind off driving at a mild level means that the driver is not being asleep, and may be chatting with a member or reading a book, etc. In this case, the sound prompt alone may not be effective in alerting or prompting the driver. Therefore, when the driver is wearing the wearable device such as a watch or a wristband (Note: the system/the vehicle control device can sense whether the driver is wearing the wearable device), the driver is directly and effectively warned or prompted with the vibration and sound (and text) of the watch or the wristband.

In still another embodiment, step S130 includes: when the driver is required to take over in an autonomous driving scenario or there is information to be prompted in an autonomous or human driving scenario, and the driver status information indicates that the driver is taking mind off driving at a severe level, alerting the driver with a sound of a vehicle head unit, and vibrations of a mobile phone and/or a wearable device and a seat. Taking mind off driving at a severe level means that the driver is being hardly awakened, such as being asleep (which may be, for example, sensed by a system such as a camera). In this case, a plurality of alerts or prompts (a vibration, sound and text of a mobile phone, a sound and text of a vehicle head unit, a vibration, sound and text of a wristband or a mobile phone, and a vibration of a seat) need to work simultaneously, to ensure that the driver is awakened.

In one or more embodiments, the information to be prompted may include (but is not limited to) a charging reminder, an imminent destination reminder, a vehicle failure reminder, a remote service reminder, etc.

In addition, those skilled in the art readily understand that the method 1000 for prompting a driver provided in the one or more embodiments of the disclosure may be implemented by using a computer program. For example, the computer program is included in a computer program product. The computer program, when executed by a processor, implements the method 1000 for prompting a driver according to one or more embodiments of the disclosure. For another example, when a computer storage medium (for example, a USB flash drive) storing the computer program is connected to a computer, the method 1000 for prompting a driver according to one or more embodiments of the disclosure can be performed by running the computer program.

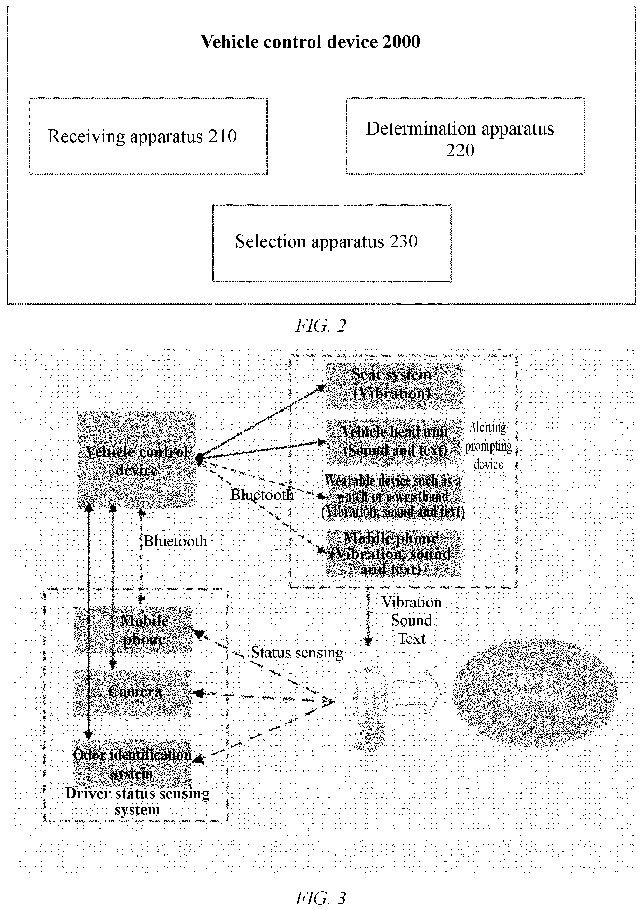

Referring to FIG. 2, FIG. 2 shows a vehicle control device 2000 according to an embodiment of the disclosure. As shown in FIG. 2, the vehicle control device 2000 includes: a receiving apparatus 210, a determination apparatus 220, and a selection apparatus 230. The receiving apparatus 210 is configured to receive driver status information from a driver status sensing system; the determination apparatus 220 is configured to determine a current driving scenario; and the selection apparatus 230 is configured to select a suitable prompt from among a plurality of candidate prompts based on the driver status information in combination with the driving scenario, to remind or alert a driver.

"Driver status information", as the name implies, is information related to a status of a driver and is used to indicate how and in what state the driver uses a vehicle control component. In general, the status of the driver may be obtained from comprehensive analysis of a driving behavior, a driving style, vehicle characteristics, environmental conditions, etc., or may be inferred from physiological factors, external expressions, and emotional factors.

In the context of the disclosure, the driver status information is obtained by the driver status sensing system. The driver status sensing system may also be referred to as a multi-sensing system. In an embodiment, the driver status sensing system or the multi-sensing system may include: a camera, an odor sensing system, and a device (for example, a smart device such as a mobile phone, and a wearable device such as a wristband and a watch) which is interconnected with a vehicle control device 2000 via Bluetooth. For example, the camera can be used to acquire an image of the driver. Based on the image, the driver can be found to exhibit a sign of distraction, fatigue or drowsiness, or even an unforeseen failure to drive, such as tricking a driving assistance system by keeping a mineral water bottle, in place of his/her hands, on a steering wheel, or arguing and fighting with passengers, etc. As an example, physical and mental conditions of the driver can be studied based on processing of a facial image of the driver. For example, the status of the driver can be detected in terms of eyelid closure, eye blinking, gaze direction, yawning, head movements, etc. Symptoms related to fatigue, distraction, and drowsiness are extracted, including: 1) symptoms related to an eye region: eye closing, distance between eyelids, fast eye blinking, gaze direction, and saccades; 2) symptoms related to a mouth region: opening/closing; 3) symptoms related to the head: head-nodding, and unchanged head posture and head; and 4) symptoms related to the face: mainly expressions.

The odor sensing system is used to sense odor characteristics of the driver. For example, one or more odor sensors are placed on a seat and a backrest, a headrest or the vehicle roof to detect an odorous substance released into ambient air by the human body, as well as environmental odor characteristics of the interior space, to determine whether the driver is driving drunk.

As part of the driver status sensing system, a device (e.g., a mobile phone) which is interconnected with the vehicle control device 2000 via Bluetooth can be used to provide the driver status information regarding whether the driver is using the mobile phone (e.g., calling, messaging, etc.). It can be understood that in addition to the manner of interconnection via Bluetooth, a smart device (such as a mobile phone) can also be connected to the vehicle control device 2000 in other wired or wireless connection manners, including, but not limited to, WiFi, RFID, etc.

In one or more embodiments, the driver status may include: the driver has no or insufficient ability to take over (such as falling into asleep due to extreme fatigue, or getting drunk), the driver is operating a mobile phone (gazing at or operating a mobile phone), the driver is keeping mind on driving (keeping his/her hands on the steering wheel and eyes on the road ahead), the driver is taking mind off driving at a mild level, the driver is taking mind off driving at a severe level, etc.

"No ability to take over" refers to a situation where drunk driving is detected by an odor sensor or a driver is detected to fall into asleep (due to extreme fatigue, etc.) by a detection device such as a camera. In these cases, the driver has no ability to take over when needed under an autonomous driving system.

"Whether the driver is operating a mobile phone (including gazing at or operating a mobile phone)" refers to a situation where a mobile phone connected to the vehicle control device 2000, an in-vehicle camera, etc. are used to sense that the driver is operating the mobile phone.

"The driver is keeping mind on driving" can include keeping his/her hands on the steering wheel and eyes on the road ahead. For example, the in-vehicle camera and other means are used to identify that the driver is paying attention to the driving of the vehicle, such as holding the steering wheel with his/her hands, keeping eyes on the road ahead, and not dealing with some things that are unrelated to the driving of the vehicle.

Taking mind off driving at a severe level means that the driver is being hardly awakened, such as being asleep (which may be, for example, sensed by a system such as a camera).

Taking mind off driving at a mild level, between "The driver is keeping mind on driving" and "Taking mind off driving at a severe level", means that the driver is not being asleep, but may be, for example, chatting with a member or reading a book.

Driver attributes, design parameters and operating statuses of the vehicle, and the driving environment of the vehicle change each other, forming a complicated driving scenario. In the context of the disclosure, accurate identification of a driving scenario in which the vehicle is currently located (i.e., the current driving scenario) facilitates selecting a suitable prompt from among a plurality of candidate prompts to remind or alert the driver. In an embodiment, the current driving scenario is that an autonomous driving mode is being entered. In another embodiment, the current driving scenario is that an autonomous driving mode has been entered, but a driver is required to take over. In still another embodiment, the current driving scenario is that there is information to be prompted in an autonomous or human driving scenario.

In an embodiment, the candidate prompts may include, but are not limited to, a vibration of a seat system, a sound and text of a vehicle head unit, a vibration, sound and text of a wearable device such as a watch or a wristband, and a vibration, sound and text of a mobile phone.

In an embodiment, the selection apparatus 230 is configured to: when the determination apparatus 220 determines that an autonomous driving scenario has been entered, and the driver status information received by the receiving apparatus 210 indicates that the driver has no ability to take over, awaken the driver by means of an option of a sound of a vehicle head unit and vibrations of a mobile phone and/or a wearable device and a seat, so that the driver drives to a safety place. "No ability to take over" refers to a situation where drunk driving is detected by an odor sensor or a driver is detected to fall into asleep (due to extreme fatigue, etc.) by a detection device such as a camera. In these cases, the driver has no ability to take over when needed under an autonomous driving system, and is thus given an alert to drive to the nearest safety place to rest.

In another embodiment, the selection apparatus 230 is configured to: when the determination apparatus 220 determines that the driver is required to take over in an autonomous driving scenario or the determination apparatus 220 determines that there is information to be prompted in an autonomous or human driving scenario, and the driver status information received by the receiving apparatus 210 indicates that the driver is operating a mobile phone, alert the driver by means of an option of a vibration and sound of the mobile phone. "The driver is operating a mobile phone" means that a mobile phone connected to the vehicle control device 2000, an in-vehicle camera, etc. are used to sense that the driver is operating the mobile phone (including gazing at or operating the mobile phone). In this case, the vibration, sound and text of the mobile phone are a direct and effective way to alert or prompt the driver.

In still another embodiment, the selection apparatus 230 is configured to: when the determination apparatus 220 determines that the driver is required to take over in an autonomous driving scenario or the determination apparatus 220 determines that there is information to be prompted in an autonomous or human driving scenario, and the driver status information received by the receiving apparatus 210 indicates that the driver is keeping mind on driving, alert the driver by means of an option of a sound and text of a vehicle head unit. Because the driver is keeping mind on driving and is not dealing with some things that are unrelated to vehicle driving, the sound and text of the vehicle head unit have already been an effective way to alert or prompt the driver.

In still another embodiment, the selection apparatus 230 is configured to: when the determination apparatus 220 determines that the driver is required to take over in an autonomous driving scenario or the determination apparatus 220 determines that there is information to be prompted in an autonomous or human driving scenario, and the driver status information received by the receiving apparatus 210 indicates that the driver is taking mind off driving at a mild level, alert the driver by means of an option of a vibration and sound of a wearable device. Taking mind off driving at a mild level means that the driver is not being asleep, and may be chatting with a member or reading a book, etc. In this case, the sound prompt alone may not be effective in alerting or prompting the driver. Therefore, when the driver is wearing the wearable device such as a watch or a wristband (Note: the system/the vehicle control device can sense whether the driver is wearing the wearable device), the driver is directly and effectively warned or prompted with the vibration and sound (and text) of the watch or the wristband.

In still another embodiment, the selection apparatus 230 is configured to: when the determination apparatus 220 determines that the driver is required to take over in an autonomous driving scenario or the determination apparatus 220 determines that there is information to be prompted in an autonomous or human driving scenario, and the driver status information received by the receiving apparatus 210 indicates that the driver is taking mind off driving at a severe level, alert the driver by means of an option of a sound of a vehicle head unit and vibrations of a mobile phone and/or a wearable device and a seat. Taking mind off driving at a severe level means that the driver is being hardly awakened, such as being asleep (which may be, for example, sensed by a system such as a camera). In this case, a plurality of alerts or prompts (a vibration, sound and text of a mobile phone, a sound and text of a vehicle head unit, a vibration, sound and text of a wristband or a mobile phone, and a vibration of a seat) need to work simultaneously, to ensure that the driver is awakened.

In one or more embodiments, the vehicle control device 2000 may be integrated into various types of vehicles, which is not limited in the disclosure.

Referring to FIG. 3, it is a schematic diagram of a structure of a system for prompting a driver according to an embodiment of the disclosure. As shown in FIG. 3, a driver status sensing system includes a mobile phone, a camera, and an odor identification sensor, which are used to sense a status of a driver. In the driver status sensing system, the mobile phone is connected to a vehicle control device via Bluetooth.

In an alerting or prompting device, there are a variety of candidate prompts, including a vibration of a seat system, a sound and text of a vehicle head unit, a vibration, sound and text of a wearable device such as a watch or a wristband, and a vibration, sound and text of a mobile phone. The wearable device and the mobile phone can be connected to the vehicle control device via Bluetooth. Under control of the vehicle control device, the alerting/prompting device provides a vibration, sound and/or text to a driver, so that the driver can perform a corresponding operation in a timely manner, such as taking over a vehicle.

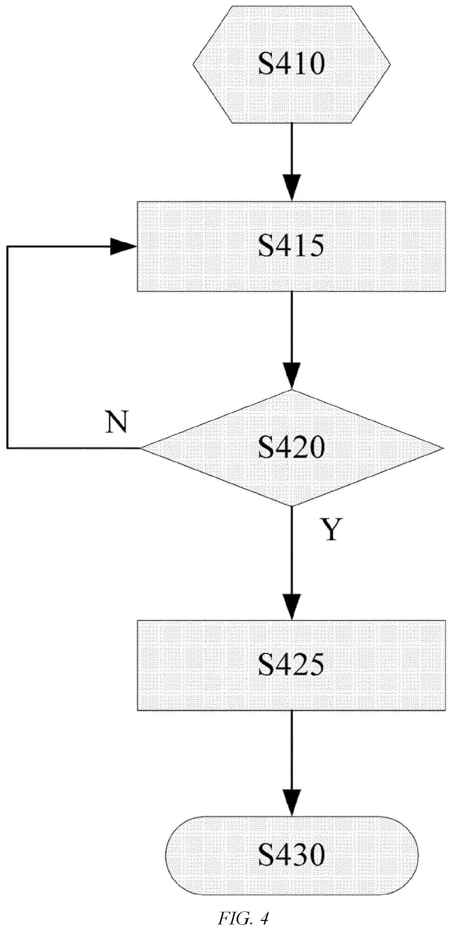

FIG. 4 is a schematic flowchart of an alerting method for driving to a safety place to rest in autonomous driving according to an embodiment of the disclosure. As shown in FIG. 4, in step S410, the entire process starts. Next, in step S415, it is determined that an autonomous driving scenario has been entered. Then, in step S420, it is determined whether a driver has an ability to take over. If so, the process proceeds to step S425, otherwise the process returns to step S415. In step S425, a prompt is given in the form of a sound of a vehicle head unit and vibrations of a wristband, a mobile phone and a seat. Finally, in step S430, the driver is awakened, and then drives a vehicle to a safety place.

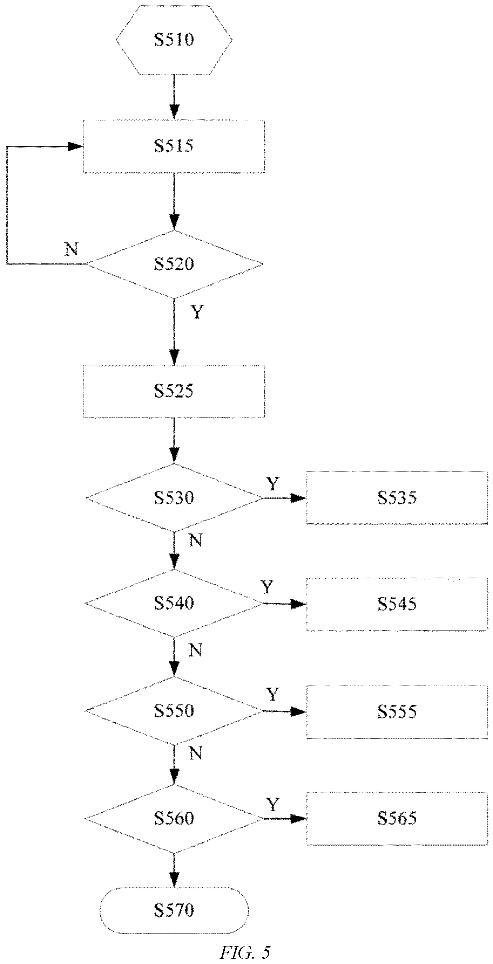

FIG. 5 is a schematic flowchart of an alerting method for driver takeover in autonomous driving according to an embodiment of the disclosure. As shown in FIG. 5, in step S510, the entire process starts. Next, in step S515, it is determined that an autonomous driving scenario has been entered. Then, in step S520, it is determined whether a driver needs to be alerted to take over. If so, the process proceeds to step S525, otherwise the process returns to step S515. In step S525, a status of the driver is identified, so that an appropriate alerting mode can be selected subsequently. In step S530, it is determined whether the driver is operating a mobile phone. If so, step S535 is performed, otherwise step S540 is performed. In step S535, an alert is raised in the form of a vibration and sound of a mobile phone. In step S540, it is determined whether the driver is keeping mind on driving. If so, step S545 is performed, otherwise step S550 is performed. In step S545, an alert is raised in the form of a sound and text of a vehicle head unit. In step S550, it is determined whether the driver is taking mind off driving at a mild level. If so, step S555 is performed, otherwise step S560 is performed. In step S555, an alert is raised in the form of a vibration and sound of a wearable device such as a wristband/a watch. In step S560, it is determined whether the driver is taking mind off driving at a severe level. If so, in step S565, an alert is raised in the form of a sound of a vehicle head unit and vibrations of a wristband, a mobile phone and a seat. Finally, in step S570, the driver is alerted and accordingly takes over a vehicle.

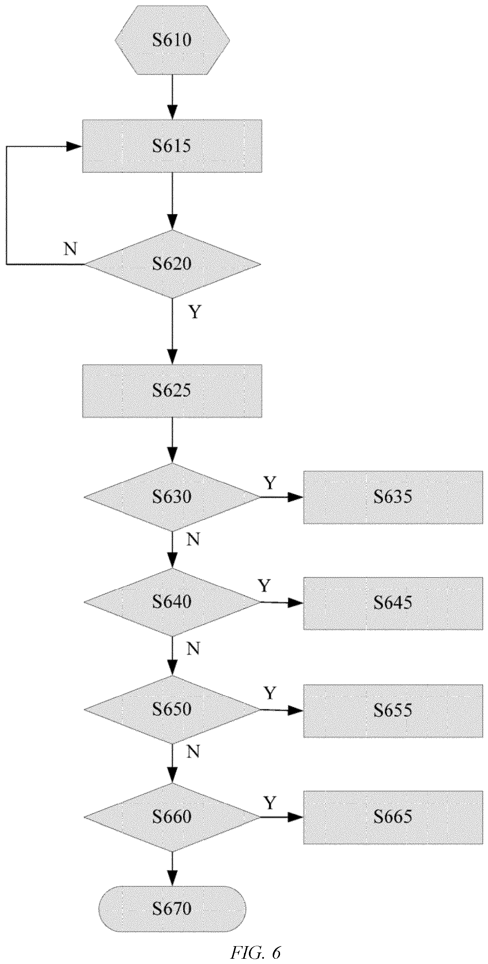

FIG. 6 is a schematic flowchart of an information prompting method in autonomous driving or human driving according to an embodiment of the disclosure. As shown in FIG. 6, in step S610, the entire process starts. Next, in step S615, it is determined that an autonomous driving scenario or a human driving scenario has been entered. Then, in step S620, it is determined whether there is information to be prompted. If so, the process proceeds to step S625, otherwise the process returns to step S615. In step S625, a status of the driver is identified, so that an appropriate alerting mode can be selected subsequently. In step S630, it is determined whether the driver is operating a mobile phone. If so, step S635 is performed, otherwise step S640 is performed. In step S635, a prompt is given in the form of a vibration and sound of a mobile phone. In step S640, it is determined whether the driver is keeping mind on driving. If so, step S645 is performed, otherwise step S650 is performed. In step S645, a prompt is given in the form of a sound and text of a vehicle head unit. In step S650, it is determined whether the driver is taking mind off driving at a mild level. If so, step S655 is performed, otherwise step S660 is performed. In step S655, a prompt is given in the form of a vibration, sound and text of a wearable device such as a wristband/a watch. In step S660, it is determined whether the driver is taking mind off driving at a severe level. If so, in step S665, a prompt is given in the form of a sound of a vehicle head unit and vibrations of a wristband, a mobile phone and a seat. Finally, in step S670, the driver is prompted and performs a subsequent operation.

In conclusion, in the solution for prompting a driver according to the embodiments of the disclosure, a driver status sensing system (also referred to as a multi-sensing system, including, for example, a camera/an odor sensor, etc., and a mobile phone or a wearable device which is interconnected with a vehicle via Bluetooth) is used to sense a status of a driver, and a corresponding and suitable alert or prompt is adopted based on the status of the driver in combination with a current driving scenario, such that the driver can receive information in a friendly, direct and effective, and safe manner, and thus perform a next operation for safety.

Although only some embodiments of the disclosure are described in the specification, it will be appreciated by those skilled in the art that the disclosure may be embodied in many other forms without departing from the essence and scope thereof. Accordingly, the presented examples and implementations are considered to be illustrative rather than restrictive, and the disclosure may encompass various modifications and replacements without departing from the spirit and scope of the disclosure that are defined by the appended claims.

## Claims

1. A method for prompting a driver, comprising:
receiving driver status information from a driver status sensing system;
determining a current driving scenario; and
selecting a suitable prompt from among a plurality of candidate prompts based on the driver status information in combination with the driving scenario, to remind or alert a driver.

2. The method according to claim 1, wherein the driver status sensing system comprises: a smart device, which is interconnected with a vehicle, a camera sensor, and an odor identification system.

3. The method according to claim 1 or 2, wherein selecting a suitable prompt from among a plurality of candidate prompts based on the driver status information in combination with the driving scenario, to remind or alert a driver comprises:
when it is determined that an autonomous driving scenario has been entered, and the driver status information indicates that the driver has no ability to take over, awakening the driver with a sound of a vehicle head unit, and vibrations of a mobile phone and/or a wearable device and a seat, so that the driver drives to a safety place.

4. The method according to claim 1, 2 or 3, wherein selecting a suitable prompt from among a plurality of candidate prompts based on the driver status information in combination with the driving scenario, to remind or alert a driver comprises:
when the driver is required to take over in an autonomous driving scenario or there is information to be prompted in an autonomous or human driving scenario, and the driver status information indicates that the driver is operating a mobile phone, alerting the driver with a vibration and sound of the mobile phone.

5. The method according to any of claims 1 to 4, wherein selecting a suitable prompt from among a plurality of candidate prompts based on the driver status information in combination with the driving scenario, to remind or alert a driver comprises:
when the driver is required to take over in an autonomous driving scenario or there is information to be prompted in an autonomous or human driving scenario, and the driver status information indicates that the driver is keeping mind on driving, alerting the driver with a sound and text of a vehicle head unit.

6. The method according to any of claims 1 to 5, wherein selecting a suitable prompt from among a plurality of candidate prompts based on the driver status information in combination with the driving scenario, to remind or alert a driver comprises:
when the driver is required to take over in an autonomous driving scenario or there is information to be prompted in an autonomous or human driving scenario, and the driver status information indicates that the driver is taking mind off driving at a mild level, alerting the driver with a vibration and sound of a wearable device.

7. The method according to any of claims 1 to 6, wherein selecting a suitable prompt from among a plurality of candidate prompts based on the driver status information in combination with the driving scenario, to remind or alert a driver comprises:
when the driver is required to take over in an autonomous driving scenario or there is information to be prompted in an autonomous or human driving scenario, and the driver status information indicates that the driver is taking mind off driving at a severe level, alerting the driver with a sound of a vehicle head unit, and vibrations of a mobile phone and/or a wearable device and a seat.

8. A vehicle control device, comprising:
a receiving apparatus configured to receive driver status information from a driver status sensing system;
a determination apparatus configured to determine a current driving scenario; and
a selection apparatus configured to select a suitable prompt from among a plurality of candidate prompts based on the driver status information in combination with the driving scenario, to remind or alert a driver.

9. A computer program product, comprising a computer program, wherein the computer program, when executed by a processor, implements a method according to any one of claims 1 to 7.

10. A vehicle, comprising a vehicle control device according to claim 8.
